(19) Europäisches Patentamt
European Patent Office
Office européen des brevets

(11) Veröffentlichungsnummer: **0 532 538 B1**

# (12) EUROPÄISCHE PATENTSCHRIFT

(45) Veröffentlichungstag der Patentschrift: **18.10.95**

(51) Int. Cl.$^6$: **C09J 4/00**

(21) Anmeldenummer: **91909698.2**

(22) Anmeldetag: **23.05.91**

(86) Internationale Anmeldenummer:
**PCT/EP91/00962**

(87) Internationale Veröffentlichungsnummer:
**WO 91/18956 (12.12.91 91/28)**

## (54) KOMBINATIONSERZEUGNIS ZUM VERKLEBEN VON FÜGETEILEN, ENTHALTEND EINEN CYANACRYLAT-KLEBSTOFF UND EIN IMIDAZOLDERIVAT ALS PRIMER.

(30) Priorität: **01.06.90 DE 4017801**
**01.06.90 DE 4017802**
**09.11.90 DE 4035680**

(43) Veröffentlichungstag der Anmeldung:
**24.03.93 Patentblatt 93/12**

(45) Bekanntmachung des Hinweises auf die Patenterteilung:
**18.10.95 Patentblatt 95/42**

(84) Benannte Vertragsstaaten:
**AT BE CH DE DK ES FR GB IT LI LU NL SE**

(56) Entgegenhaltungen:

**PATENT ABSTRACTS OF JAPAN vol. 14, no. 208 (C-714)(4151) 27. April 1990 & JP-A-2 45 572 (TOAGOSEI CHEM ) 15. Februar 1990 in der Anmeldung erwähnt siehe dasganze Dokument**

**PATENT ABSTRACTS OF JAPAN vol. 11, no. 193 (C-430)(2640) 20. Juni 1987 & JP-A-62 18 485 (ALPHA GIKEN ) 27. Januar 1987 siehe das ganze Dokument**

(73) Patentinhaber: **Henkel Kommanditgesellschaft auf Aktien**

**D-40191 Düsseldorf (DE)**

(72) Erfinder: **NICOLAISEN, Heinz**
**Paul-Ehrlich-Strasse 13**
**D-3003 Ronnenberg 3 (DE)**
Erfinder: **REHLING, Annette**
**Gerrit-Engelke-Strasse 12**
**D-3007 Gehrden 1 (DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Kombinationserzeugnis zum Verkleben von Fügeteilen aus synthetischem Kunststoff, enthaltend einen Cyanacrylat-Klebstoff und ein Imidazolderivat als Primer, sowie den Primer selbst, dessen Verwendung und das Verfahren zur Verklebung.

Es ist bekannt, daß Formteile aus synthetischem Kunststoff, insbesondere unpolaren Werkstoffen wie Polyethylen, Polypropylen, Polybutylen, Polyoxymethylen, Polytetrafluorethylen, Polyurethan, Polysilikonen und dergleichen nur dann miteinander verklebt werden können, nachdem die Oberflächen der Formteile einer speziellen Vorbehandlung unterworfen wurden, vgl. Ullmann's Encyclopaedia of Industrial Chemistry, Bd. Al, S. 254, Verlag Chemie Weinheim, 1985. Durch die bekannten Vorbehandlungen wird die Oberflächenenergie der Formteile erhöht, und zwar im allgemeinen durch Oxidation. Typische Methoden der Vorbehandlung schließen die Behandlung mit oxidierenden Flammen, oxidierenden Stoffen oder elektrischen Entladungen ein.

Es ist weiterhin bekannt, die Oberflächen unpolarer Kunststoffe, die mit Cyanacrylat-Klebstoffen verklebt werden sollen, mit Primern vorzubehandeln, die Lösungen bestimmter Wirkstoffe in geeigneten organischen Lösemitteln umfassen. So beschreibt die PCT-WO 88/10289 die Verwendung verschiedener Diazabicyclo- oder Triazabicycloverbindungen in Lösemitteln wie Aceton, Methylethylketon, chlorierten Kohlenwasserstoff oder Methanol als Primer für den vorgenannten Zweck. Dabei werden die Primerlösungen auf die zu verklebenden Oberflächen auftragen; nach dem Verdampfen des Lösemittels erfolgt dann das Auftragen der Cyanacrylatklebstoffe und das Verbinden der so behandelten Oberflächen. Andere Primerwirkstoffe sind primäre aliphatische Amine (EP-A 0 295 013), quartäre Ammoniumverbindungen (EP-A 339 448), Derivate des Lutidins, Picolins, Pyridins und 1-Vinylimidazols [C.A. 106:197637z, 197638a (1987)], sowie verschiedene Chinolin- und Pyrridinderivate (JA 62/195071).

Es ist jedoch ein wesentlicher Nachteil eines Teiles der vorgenannten Primersubstanzen, daß sie die Aushärtung der Cyanacrylat-Klebstoffe beschleunigen, ohne daß es dabei zu einer verbesserten Haftung an den jeweiligen Materialien kommt. Häufig resultiert sogar - aufgrund der spontanen Vernetzung - eine deutlich geringere Haftung im Vergleich zu nicht vorbehandelten Oberflächen. Ein weiterer Nachteil der aus der PCT WO 88/10289 und der EP-A 0 295 013 bekannten Primer liegt in dem Umstand begründet, daß die anschließende Beschichtung mit den Cyanacrylatklebstoffen möglichst schnell nach dem Aufbringen des Primers erfolgen muß, weil sonst die Festigkeit der Verklebung nachläßt. Weiterhin ist bezüglich des als Primer bekannten Vinylimidazols zu berücksichtigen, daß diese Verbindung als äußerst gesundheitsschädlich eingestuft ist.

In der japanischen Patentanmeldung JP 02-45572 A wird ein Primer für Cyanacrylate beschrieben, dessen wirksame Substanz durch ein Imidazol-Ring charakterisiert ist. Konkret werden genannt: Imidazol, 2-Methyl-imidazol, 2-Ethyl-4-methyl-imidazol, 1-Hydroxyethyl-2-methyl-imidazol, 2-Amino-benzimidazol, 5-Nitrobenzimidazol und N[(p-2-benzimidazol)phenyl]maleinsäureimid. Damit werden höhere Scherfestigkeiten erreicht als bei Primern mit Dimethylanilin, p-Toluiden oder Diethylamin. Dennoch sind die erreichten Festigkeiten für viele Einsatzgebiete nicht hoch genug.

Die erfindungsgemäße Aufgabe besteht also darin, die Handhabung und die Gebrauchseigenschaften von Primern für Cyanacrylat-Klebstoffe zu verbessern, insbesondere die oben erwähnten Nachteile zu beseitigen, also bei einer möglichst hohen Festigkeit die Zwischenlagerzeit zwischen dem Auftrag des Primers und dem des Klebstoffs zu verlängern.

Die erfindungungsgemäße Lösung besteht in der Verwendung von Imidazolderivaten der allgemeinen Formel I

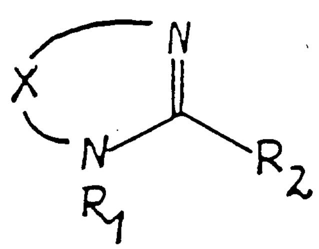

(I)

wobei

$R_1$ ein Wasserstoff,
eine Alkyl-Gruppe, die unsubstituiert

oder mit einer HO-Gruppe oder einer (Alkyl-O)$_3$ Si-Gruppe substituiert ist, wobei das Alkyl-Radikal 1 bis 4 C-Atome hat, eine Aryl-Alkyl-Gruppe mit 7 bis 10 C-Atomen oder eine Imidazol-CO-Gruppe sein kann und

$R_2$ ein Wasserstoff,
eine Alkyl-, Aryl- oder eine Aryl-Alkyl-Gruppe mit bis zu 17 C-Atomen mit der Bedingung, daß einer der Substituenten $R_1$ oder $R_2$ einen aromatischen Charakter hat,

X eine der folgenden Gruppen:
-CH = CH - oder
$-CR_3R_4-CR_5R_6-$

wobei $R_3$, $R_4$, $R_5$ und $R_6$ unabhängig voneinander Wasserstoff, eine Alkyl-Gruppe mit 1 bis 4 C-Atomen oder eine Aryl-Alkyl-Gruppe mit bis zu 17 C-Atomen ist.

Gemäß allgemeiner Definition hat eine Verbindung "aromatischen Charakter", wenn ein Elektronensextett in einer iso- oder heterocyclischen Ring-Verbindungen vorhanden ist wie z.B. bei Benzol oder Imidazol.

Derartige Imidazolderivate ergeben sehr feste Verklebungen mit Cyanacrylatklebstoffen. Überraschenderweise nimmt deren Festigkeit mit der Einwirkzeit des Primers zu und geht erst nach längerer Zeit, insbesondere nach mehreren Stunden wieder zurück; es ist daher nicht mehr erforderlich, den Auftrag der Cyanacrylatklebstoffe und die Verklebung möglichst rasch nach der Primerbehandlung vorzunehmen.

Bevorzugt sind Imidazolderivate mit X = $-CR_3R_4-CR_5R_6-$, insbesondere 4,5-Dihydroimidazol, die auch Imidazoline genannt werden.

Wenn X -CH = CH- ist, haben $R_1$ und $R_2$ vorzugsweise folgend Bedeutung:

$R_1$ ist eine Aryl-Gruppe mit 7 bis 10 C-Atomen oder eine Imidazol-CO-Gruppe und
$R_2$ ist Wasserstoff oder eine Alkyl-Gruppe mit 1 bis 4 C-Atomen.

Insbesondere ist $R_1$ eine Methyl- oder Benzylgruppe und $R_2$ Wasserstoff oder eine Methylgruppe.

Wenn X $-CR_3R_4$ - $CR_5R_6$- ist, haben $R_1$, $R_2$, $R_3$, $R_4$, $R_5$ und $R_6$ vorzugsweise folgende Bedeutung:

$R_1$ ist Wasserstoff oder eine Hydroxyalkyl-Gruppe,
$R_2$ eine Aryl- oder eine Aryl-Alkylgruppe mit bis zu 17 C-Atomen und
$R_3$, $R_4$, $R_5$ und $R_6$ unabhängig voneinander Wasserstoff oder eine Alkylgruppe mit 1 bis 4 C-Atomen.

Insbesondere ist $R_1$ Wasserstoff oder eine Hydroxyethylgruppe, $R_2$ eine Benzyl- oder Phenylgruppe sowie $R_3$, $R_4$, $R_5$ und $R_6$ Wasserstoff.

Ein besonders vorteilhaftes Imidazolinderivat zur Verwendung im Rahmen des Verfahrens der Erfindung ist 2-Phenyl-2-imidazolin.

Typische Beispiele für Aryl- bzw. Aralkylgruppen, die den Substituenten $R_2$ bilden können, sind Phenyl-, Naphthyl-, Tolyl, Xylyl, Benzyl- und Naphthylmethylgruppen. Typische Beispiele für Alkylgruppen mit 1 bis 17 Kohlenstoffatomen, die ebenfalls die Gruppe $R_2$ bilden können, sind Methyl-, Ethyl-, Propyl-, Butyl-, Pentyl-, Heptyl-, Nonyl-, Undecyl-, Tridecyl-, Pentadecyl- und Heptadecylgruppen; geradkettige Alkylgruppen sind dabei bevorzugt. Es können im übrigen auch technische Gemische dieser 2-Alkylimidazolderivate eingesetzt werden, die Alkylgruppen gemäß der obigen Aufstellung unterschiedlicher Kettenlänge enthalten. Typische Beispiele für Alkylgruppen mit 1 bis 4 Kohlenstoffatomen und Arylgruppen, die die Substituenten $R_3$, $R_4$, $R_5$ und $R_6$ bilden können, ergeben sich aus der obigen Aufzählung.

Die erfindungsgemäß einzusetzenden Imidazolderivate der allgemeinen Formel I eignen sich bevorzugt für die Vorbehandlung von Polyoxymethylen, von Polyolefinen, z.B. Polyethylen, Polypropylen und fluorierten Polyethylenen, insbesondere Polytetrafluorethylen sowie thermoplastischen Kautschukmassen und Silikonkautschukmassen.

Die Verklebung dieser Kunststoffe kann mit üblichen Cyanacrylaten erfolgen, z.B. solchen der allgemeinen Formel II

$H_2C = C(CN)-COOR^3$ (II)

in der $R^3$ eine Alkyl-, Alkenyl-, Cycloalkyl-, Aryl-, Alkoxyalkyl-, Aralkyl- oder Haloalkylgruppe bedeutet, insbesondere eine Methyl-, Ethyl-, n-Propyl-, iso-Propyl, n-Butyl-, iso-Butyl-, Pentyl-, Hexyl-, Allyl-, Methallyl-, Crotyl-, Propargyl-, Cyclohexyl-, Benzyl-, Phenyl-, Cresyl-, 2-Chlorethyl-, 3-Chlorpropyl-, 2-Chlorbutyl-, Trifluorethyl-, 2-Methoxyethyl-, 3-Methoxybutyl- und 2-Ethoxyethylgruppe ist.

Die vorgenannten Cyanacrylate sind dem Klebstoffachmann bekannt, vgl. Ullmann's Encyclopaedia of Industrial Chemistry, Bd. Al, S. 240, Verlag Chemie Weinheim (1985) sowie US-PS 3 254 111 und US-PS 3 654 340.

Gemäß einer weiteren vorteilhaften Ausführungsform der Erfindung verwendet man die Imidazolderivate in Lösung in polaren organischen Lösemitteln, die bei Raumtemperatur verdunsten und gegenüber den Imidazolderivaten inert sind. Typische Beispiele für derartige Lösemittel sind Ketone, Ester, Alkohole,

aliphatische und aromatische Kohlenwasserstoffe sowie halogenierte Kohlenwasserstoff einschließlich Mischungen derselben. Besonders bevorzugte Lösemittel sind dabei die aus der von Ketonen mit 3 bis 8 Kohlenstoffatomen, Alkanolen mit 1 bis 4 Kohlenstoffatomen und Estern der Essigsäure mit Alkanolen mit 1 bis 4 Kohlenstoffatomen gebildeten Gruppe, z.B. Aceton, Methylethylketon, Methanol, Ethanol, Propanol, Butanol sowie Essigsäureethyl-, Propyl- und Butylester.

Gemäß einer weiteren vorteilhaften Ausführungsform der Erfindung setzt man die Imidazolderivate in einer 0,001 bis 5,0, insbesondere 0,05 bis 2,0 gew.-%igen Lösung ein. Derartige Lösungen können durch Eintauchen, Aufsprühen, Aufstreichen oder andere geeignete Verfahren auf die zu behandelnde Oberfläche in feiner Verteilung aufgebracht werden. Die Einwirkzeit an der Oberfläche kann dabei durch die Abdunstungsgeschwindigkeit des Lösemittels bzw. des Lösemittelgemisches beeinflußt werden. Bevorzugte Lösemittel sind dabei solche, die neben einem ausreichenden Lösevermögen für die Wirksubstanz auch eine gute Stabilität derselben in der Lösung ergeben.

Der Primerlösung können weiterhin zur besseren Applikationskontrolle Farbstoffe oder optische Aufheller zugesetzt werden. Dabei kann nach Verdunsten des Lösemittels durch Farbkontraste oder durch geeignete opto-elektronische Meßverfahren, z.B. Lumineszenztaster oder UV-Lampen, das Vorhandensein des Primers nachgewiesen werden.

Die Erfindung betrifft nicht nur die Verwendung von mindestens einem Imidazolderivat der allgemeinen Formel I als Primer für die Verklebung von Fügeteilen aus Polyolefinen wie Polyethylen oder Polypropylen, aus fluorhaltigen Polymeren oder aus thermoplastischem Kautschuk, sondern auch den Primer selbst, also eine Zusammensetzung mit mindestens einem Imidazoderivat nach der allgemeinen Formel I und einem polaren organischen Lösemittel, das bei Raumtemperatur verdunstet.

Außerdem betrifft die Erfindung ein Kombinationserzeugnis zum Verkleben von Fügeteilen aus synthetischem Kunststoff, das neben dem Primer auch noch einen Cyanacrylat-Klebstoff enthält.

Die Erfindung betrifft weiterhin ein Verfahren zur Verklebung von Fügeteilen aus synthetischem Kunststoff mit Cyanacrylat-Klebstoffen, wobei Imidazolderivate der allgemeinen Formel I eingesetzt werden.

Die Erfindung wird im folgenden anhand von bevorzugten Ausführungsbeispielen näher erläutert.

Es wurden verschiedene erfindungsgemäß zu verwendende Imidazolverbindungen in einem Lösemittel, ausgewählt aus der von Aceton, Ethanol, Propanol und dem 1 : 1 (w/w)-Gemisch aus Ethanol und Ethylacetat gebildeten Gruppe, gelöst. In der Regel waren homogene Lösungen innerhalb von 30 min durch Schütteln herstellbar. Mit Lösungen wurden Prüfstreifen verschiedener Materialien mit den Maßen 100 x 25 x 3 mm eingetaucht. Dabei wurden als Kunststoffe Polyethylen (Trovidur® PE, natur), Polypropylen (Trovidur® PP, natur), Polytetrafluroethylen (Hostaflon® TF) und Polyoxymethylen (DELRIN) eingesetzt. Nach Entnahme der benetzten Proben wurde in der Regel zwischen 5 bis 15 min gewartet, bis das Lösemittel verdunstet war. Anschließend erfolgte die Verklebung der vorbehandelten Prüfstreifen mit einem handelsüblichen Cyanacrylatklebstoff auf Basis von Cyanacrylsäureethylester [Sicomet® 8300 (Fa. Sichel-Werke GmbH, Hannover, Bundesrepublik Deutschland)]. Nach der Dosierung von 2 bis 3 Tropfen des Klebstoffes auf die vorbehandelte Werkstoffoberfläche wurde der Klebstoff durch Auflegen eines zweiten, ebenfalls mit dem Primer behandelten Prüfstreifens unter gleichzeitigem leichtem Verschieben binnen weniger Sekunden gut verteilt. Nach dem exakten Ausrichten auf die erforderlichen Maße wurden die Fügeteile mit der frisch hergestellten Klebeverbindung mit einer Fixiervorrichtung 60 min lang zusammengedrückt. Hierdurch konnten leichte Oberflächenunebenheiten ausgeglichen und eine günstige Klebstoffschichtstärke von 0,01 bis 0,1 mm eingestellt werden. Der in der Praxis benötigte Kontaktdruck beträgt in der Regel nur weniger Sekunden bis einige Minuten.

Es wurden die folgenden Imidazolderivate getestet:

A: 1-Benzyl-2-methylimidazol
B: N,N'-Carbonyldiimidazol
C: 1-Benzylimidazol.
1: 2-Phenyl-2-imidazolin
2: 1-Hydroxyethyl-2-phenyl-2-imidazolin
3: 2-Benzyl-2-imidazolin
4: 3-(4,5-Dihydroimidazol-1-yl)-propyltriethoxysilan
5: 3-(2-Imidazolin-1-yl)-propyltriethoxysilan

Nach dem oben erläuterten Auftragen der Primerlösungen und des Klebstoffes sowie der Verklebung bei Raumtemperatur wurden die verklebten Prüfkörper nach einer Lagerzeit von 24 h bei 20 °C hinsichtlich der Zugscherfestigkeit der Verklebung bei einer Abzugsgeschwindigkeit von 100 mm/min (bei POM: 25 mm/min) mit einer Wolpert-Prüfmaschine TZM (50 kN) bestimmt. Die in der folgenden Tabelle 1 aufgeführten Werte stellen Durchschnittswerte aus 5 Einzelmessungen dar.

Tabelle 1

| Primer | Konz. der Aceton-Lösung (Gew.-%) | Zugscherfestigkeit [N/mm²] PE/PE[1)] | PP/PP[2)] | PTFE/PTFE[3)] | POM/POM[4)] |
|---|---|---|---|---|---|
| | | Die eingeklammerten Werte wurden nach 2 Std Lagerung erhalten. | | | |
| a) Primerlösung in Aceton | | | | | |
| A | 0,5 | 6,2 | 5,3 | 2,5 | |
| B | 0,2 | 4,1 | 6,2 | 3,0 | |
| B | 0,5 | 3,5 | 4,0 | n.b.[4)] | |
| C | 0,2 | 4,8 | 4,5 | n.b.[4)] | |
| C | 0,5 | 6,8 | 5,7 | 2,3 | |
| C | 1,0 | 5,1 | 4,5 | 2,0 | |
| 1 | 0,1 | 6,5 | 6,2 | 3,7 | |
| 1 | 0,5 | 7,2 | 6,5 | 4,0 | |
| 1 | 1,0 | 6,7 | 6,0 | 3,6 | |
| b) Primerlösung in Ethanol/Ethylacetat (1/1) | | | | | |
| 1 | 0,2 | 5,9 | 6,8 | n.b. | 6,5 |
| 1 | 0,5 | 7,2 | 7,4 | n.b. | 7,1 |
| 2 | 0,5 | 3,5 | 2,1 | n.b. | n.b. |
| 3 | 0,1 | 5,8(4,9) | 6,2 (5,0) | n.b. | 5,8 |
| 3 | 0,2 | 6,0(5,2) | 7,4 (6,2) | n.b. | 6,4 |
| 3 | 0,5 | 4,9(4,7) | 5,2 (5,5) | n.b. | n.b. |
| 4 | 0,2 | 2,1 | 3,5 | n.b. | n.b. |
| 4 | 0,35 | 2,3 | 4,6 | n.b. | n.b. |
| 5 | 0,2 | n.b. | 5,8 | n.b. | n.b. |
| Vergleich | 0 | 0,2 | 0,1 | 0 | 0,4 |

1) Polyethylen auf Polyethylen

2) Polypropylen auf Polypropylen

3) Polytetrafluorethylen auf Polytetrafluorethylen

4) Polyoxymethylen (POM) auf Polyoxymethylen

5) nicht bestimmt.

In weiteren Versuchsreihen wurden die Auswirkungen der Lagerzeit nach der Vorbehandlung bzw. nach der Verklebung untersucht. Hierzu wurden die Prüfstreifen wie oben beschrieben mit der Lösung des Primers benetzt, über verschiedene Zeiten gelagert und dann wie oben beschrieben verklebt. Eingesetzt wurden Konzentrationen von 0,2 Gew.-% und 0,5 Gew.-% Imidazolinderivat in Ethanol/Ethylacetat (1 : 1). Die Zugscherfestigkeiten wurden nach 24 h Lagerung der geklebten Verbindungen ermittelt. Die erhaltenen Ergebnisse sind in Tabelle 2 wiedergegeben.

Tabelle 2

| Primer | Konzentration der Lösung (Gew.-%) | Abdunstzeit (min) | Zugscherfestigkeit ($N/mm^2$) | |
|---|---|---|---|---|
| | | | PE/PE | PP/PP |
| 1 | 0,2 | 5 | 6,8 | 6,4 |
| 1 | 0,2 | 60 | 6,4 | 6,0 |
| 1 | 0,5 | 5 | 7,2 | 6,5 |
| 1 | 0,5 | 60 | 6,4 | 6,4 |
| 1 | 0,5 | 480 | 5,8 | 6,7 |
| 1 | 0,5 | 1440 | 5,3 | 6,0 |
| 1 | 0,5 | 2880 | 5,1 | 6,3 |
| 1 | 0,5 | 4320 | 5,2 | 6,1 |
| A | 0,5 | 5 | 6,5 | 7,2 |
| A | 0,5 | 60 | 5,8 | 7,0 |
| A | 0,5 | 480 | 4,8 | 6,5 |
| A | 0,5 | 1440 | 3,5 | 5,6 |
| A | 0,5 | 2880 | 3,1 | 5,4 |
| A | 0,5 | 4320 | 2,7 | 5,0 |
| C | 0,5 | 5 | 6,0 | 5,9 |
| C | 0,5 | 60 | 5,5 | 6,8 |
| C | 0,5 | 480 | 4,7 | 5,7 |
| C | 0,5 | 1440 | 3,6 | 4,3 |

In einer weiteren Versuchsreihe wurden die Prüfstreifen mit der Lösung des Primers benetzt, 10 min gewartet, so daß das Lösungsmittel verdunstet war, wie oben beschrieben verklebt und über verschiedene Zeiten gelagert. Danach wurden die Zugscherfestigkeiten der Verbindungen wie oben beschrieben ermittelt. Tabelle 3 gibt die erhaltenen Ergebnisse wiedern.

Tabelle 3

| Primer | Konzentration der Aceton-Lösung (Gew.-%) | Lagerzeit nach der Verklebung (Std.) | Zugscherfestigkeit ($N/mm^2$) | | |
|---|---|---|---|---|---|
| | | | PE/PE | PP/PP | PTFE/PTFE |
| 1 | 0,5 | 8 | 5,5 | 4,5 | 2,8 |
| 1 | 0,5 | 24 | 7,2 | 6,5 | 4,0 |
| 1 | 0,5 | 168 | 7,5 | 6,7 | 4,0 |
| Vergleich | - | 168 | 0,2 | 0,1 | 0,1 |

In einem weiteren Versuch wurde der Einfluß der eingesetzten Lösungsmittel untersucht. Dazu wurde der Primer in Ethanol bzw. in 2-Propanol gelöst; die Prüfstreifen wurden mit der Lösung benetzt. Nach 10 min Abdunstzeit wurden die Prüfstreifen wie oben beschrieben verklebt und nach 24 h Lagerung der geklebten Verbindungen die Zugscherfestigkeiten ermittelt. Tabelle 4 gibt die erhaltenen Ergebnisse wieder.

Tabelle 4

| Primer | Lösemittel | Konz. (Gew.-%) | Zugscherfestigkeit ($N/mm^2$) | |
|---|---|---|---|---|
| | | | PE/PE | PP/PP |
| 1 | Ethanol | 0,2 | 6,8 | 6,0 |
| 1 | Ethanol | 0,5 | 7,3 | 6,7 |
| 1 | 2-Propanol | 0,2 | 6,1 | 5,7 |
| 1 | 2-Propanol | 0,5 | 6,4 | 6,0 |

Zur weiteren Beurteilung des Effektes bei der Verklebung von thermoplastischen Elastomeren wurde ein handelsüblicher thermoplastischer Kautschuk (Santoprene[R] 101-64. Fa. Monsanto, Gluvin-La Neuve, Belgien) eingesetzt. Dieser Werkstoff weist die Elastomereigenschaften eines vulkanisierten Kautschuks und die einfachen Verarbeitungseigenschaften eines thermoplastischen Materials auf. Die Festigkeit der Klebeverbindung mit Prüfstreifen von 100 x 10 x 3 mm bei Einsatz des eben erwähnten handelsüblichen Cyanacrylatklebstoffs ohne Primervorbehandlung im Zugscherversuch betrug ca. 0,1 $N/mm^2$; dies entspricht nur einer leichten Haftung. Die Primerlösungen wurden bei diesem Versuch mit einem Pinsel aufgetragen. Nach der Vorbehandlung wurde eine Abdunstzeit des Lösemittels von jeweils 10, 60 oder 180 min abgewartet. Anschließend erfolgte die Verklebung. Die Ergebnisse sind in Tabelle 5 zusammengefaßt.

Tabelle 5

| Primer | Lösemittel | Konz. (Gew.-%) | Abdunstzeit | Zugscherfestigkeit ($N/mm_2$) |
|---|---|---|---|---|
| A | Aceton | 0,5 | 10 | 0,88 |
| C | Aceton | 0,5 | 10 | > 1* |
| 1 | Aceton | 0,2 | 10 | > 1* |
| 1 | Aceton | 0,5 | 10 | > 1* |
| 1 | Aceton | 0,5 | 60 | > 1* |
| 1 | Ethanol | 0,2 | 10 | > 1* |
| 1 | Ethanol | 0,5 | 60 | > 1* |
| 1 | Ethanol | 0,5 | 180 | > 1* |

* Materialbruch einige cm neben der Klebestelle

Somit konnte die Klebefestigkeit an thermoplastischen Elastomeren durch den Einsatz der erfindungsgemäß zu verwendenden Primer um ein Vielfaches gesteigert werden.

Vergleichsversuche mit einem handelsüblichen sowie dem strukturnächsten bekannten Produkt

Ein wesentlicher Nachteil der bisher bekannten Primerwirksubstanzen ist, daß diese einen relativ schnellen Aktivitätsabbau nach dem Auftragen zeigen. Nach der Primervorbehandlung und dem Abdunsten des Lösungsmittels muß relativ schnell mit Cyanacrylatklebstoff verklebt werden. Dieser Aktivitätsabbau binnen kurzer Zeit kann innerhalb kontinuierlicher Fertigungsprozesse zu deutlichen Qualitätseinbußen bei der Klebegüte führen, wenn es zu längeren Stillstandszeiten und Störungen nach dem Primerauftrag kommt.

Zum Vergleich wurden folgende Lösungen hergestellt:

1.) 1,8-Diazabicyclo-[5.4.0]-undec-7-ene
0,5 Gew.-% in 1,1,2-Trichlor-1,2,2-Trifluorethan (F 113)
siehe PCT-WO 88/10289
2.) 1-Vinylimidazol
0,5 Gew.-% in Ethanol/Ethylacetat (1:1)

siehe C.A. 106: 197637 z, 197638 a (1987)
Die Herstellung der Lösungen und die Vorbehandlung und Verklebung erfolgte wie bereits beschrieben.
Die ermittelten Zugscherfestigkeiten in Abhängigkeit von der Lagerzeit zwischen Primerauftrag und dem Verkleben (= Abdunstzeit) sind der Tabelle 6 zu entnehmen. Zum Vergleich ist die Tabelle 2 heranzuziehen.

Die Vergleichsversuche zeigen, daß die bevorzugte Primerwirksubstanz gemäß PCT-WO 88/10289 bereits bei > 1 Std. Abdunstzeit vor dem Verkleben an Polyethylen stärker abbaut sowie an Polypropylen bei > 8 Std. Abdunstzeit.

Das 1-Vinylimidazol ist bezüglich der Primerwirkung noch ungünstiger. An Polyethylen muß praktisch sofort nach dem Abdunsten verklebt werden. Bereits nach 5 Minuten Zwischenlagerung der vorbehandelten Kunststoffe war die erzielbare Festigkeit nach Klebstoffaushärtung sehr gering. Das Verhalten an Polypropylen ist etwas günstiger. Nach 1 Stunde Zwischenlagerung ist der gewünschte Effekt jedoch ebenfalls nicht mehr vorhanden.

Die erfindungsgemäßen Wirksubstanzen stellen eine sprunghafte Verbesserung gegenüber den bekannten Wirkstoffen dar. Das gilt ganz besonders für die erfindungsgemäße Wirksubstanz 2-Phenyl-2-imidazolin: Sie zeigt an Polyethylen selbst noch nach 72 Stunden (= 4320 Minuten) gute Festigkeiten von > 5 $N/mm^2$. An Polypropylen sind die erzielten Festigkeiten nach Zwischenlagerung der vorbehandelten Proben über 72 Stunden mit > 6 $N/mm^2$ fast unverändert gegenüber den Ausgangsdaten.

Tabelle 6

| Vergleichslösung | Abdunstzeit (min) | Zugscherfestigkeit [$N/mm^2$] | |
|---|---|---|---|
| | | PE/PE 1) | PP/PP 2) |
| 1 | 5 | 4,8 | 6,1 |
| 1 | 60 | 3,9 | 5,9 |
| 1 | 480 | 2,1 | 4,2 |
| 1 | 1440 | 1,4 | 2,0 |
| 1 | 2880 | 0,9 | 1,5 |
| 1 | 4320 | 0,8 | 1,2 |
| 2 | 1 | 5,7 | 5,8 |
| 2 | 5 | 1,3 | 6,1 |
| 2 | 60 | 0,8 | 1,3 |
| 2 | 480 | 0,6 | 0,6 |
| 2 | 1440 | 0,4 | 0,4 |

1) PE/PE = Polyethylen/Polyethylen (Trovidur$^R$ PF, natur)
2) PP/PP = Polypropylen/Polypropylen (Trovidur$^R$ PP, natur)

In einem weiteren Vergleichsversuch wurde eine konkret in der JP 02-45572 A genannte Wirksubstanz eingesetzt, nämlich Imidazol. Es wurde eine 0,5 gew.-%ige Lösung in Aceton auf die Prüfstreifen aus PE, PP und PTFE gestrichen. Nach 15 Min. war das Lösungsmittel verdunstet. Zur weiteren Behandlung s. Seiten 8 und 9. Es wurden folgende Werte für die Zugscherfestigkeit [in $N/mm^2$] erhalten:
2,0 für PE/PE, 2,5 für PP/PP und 1,5 für PTFE/PTFE.
Ein Vergleich mit den Werten der Tab. 1 zeigt, daß die Festigkeiten deutlich niedriger sind, nämlich nur etwa halb so groß.

## Patentansprüche

**1.** Kombinationserzeugnis zum Verkleben von Fügeteilen aus synthetischem Kunststoff, enthaltend einen Cyanacrylat-Klebstoff und ein Imidazolderivat als Primer, dadurch gekennzeichnet, daß der Primer mindestens ein Imidazolderivat der allgemeinen Formel I

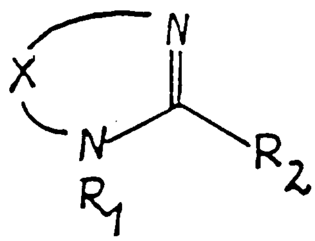

(I)

enthält, in der

$R_1$ ein Wasserstoff,
eine Alkyl-Gruppe mit, die unsubstituiert
oder mit einer HO-Gruppe oder einer (Alkyl-O)$_3$ Si-Gruppe substituiert ist, wobei das Alkyl-Radikal 1 bis 4 C-Atome hat,
eine Aryl-Alkyl-Gruppe mit 7 bis 10 CAtomen oder eine Imidazol-CO-Gruppe,

$R_2$ ein Wasserstoff,
eine Alkyl-, Aryl- oder eine Aryl-Alkyl-Gruppe mit bis zu 17 C-Atomen mit der Bedingung, daß einer der Substituenten $R_1$ oder $R_2$ einen aromatischen Charakter hat und

X eine der folgenden Gruppen ist:
-CH = CH - oder
-$CR_3R_4$-$CR_5R_6$-,

wobei $R_3$, $R_4$, $R_5$ und $R_6$ unabhängig voneinander Wasserstoff, eine Alkyl-Gruppe mit 1 bis 4 C-Atomen oder eine Aryl-Alkyl-Gruppe mit bis zu 17 C-Atomen ist.

**2.** Kombinationserzeugnis nach Anspruch 1, dadurch gekennzeichnet, daß
X -CH = CH- und
$R_1$ eine Aryl-Alkyl-Gruppe mit 7 bis 10 C-Atomen oder eine Imidazol-CO-Gruppe und
$R_2$ Wasserstoff oder eine Alkyl-Gruppe mit 1 bis 4 C-Atomen ist.

**3.** Kombinationserzeugnis nach Anspruch 2, dadurch gekennzeichnet, daß $R_1$ eine Benzylgruppe und $R_2$ Wasserstoff oder eine Methylgruppe ist.

**4.** Kombinationserzeugnis nach Anspruch 1, dadurch gekennzeichnet, daß
X - $CR_3R_4$ - $CR_5R_6$ -
$R_1$ Wasserstoff oder eine Hydroxyalkyl-Gruppe,
$R_2$ eine Aryl- oder eine Aryl-Alkyl-Gruppe mit bis zu 17 C-Atomen und
$R_3$, $R_4$, $R_5$ und $R_6$ unabhängig voneinander Wasserstoff oder eine Alkylgruppe mit 1 bis 4 C-Atomen ist.

**5.** Kombinationserzeugnis nach Anspruch 4, dadurch gekennzeichnet, daß $R_1$ Wasserstoff oder besonders eine Hydroxyethylgruppe, $R_2$ eine Benzyl- oder Phenylgruppe und $R_3$, $R_4$, $R_5$ und $R_6$ Wasserstoff ist.

**6.** Kombinationserzeugnis nach mindestens einem der Ansprüche 1 bis 5, dadurch gekennzeichnet, daß die Imidazolderivate in polaren organischen Lösemitteln, die bei Raumtemperatur verdunsten, gelöst oder suspendiert sind, insbesondere in Lösemittel aus der von Ketonen mit 3 bis 8 Kohlenstoffatomen, Alkanolen mit 1 bis 4 Kohlenstoffatomen und Estern der Essigsäure mit Alkanolen von 1 bis 4 Kohlenstoffatomen gebildeten Gruppe.

**7.** Kombinationserzeugnis nach mindestens einem der vorangegehenden Ansprüche, gekennzeichnet durch eine 0,001 bis 5,0, insbesondere 0,05 bis 2,0 gew.-%ige Lösung der Imidazolderivate.

**8.** Verwendung von mindestens einem Imidazolderivat der allgemeinen Formel I gemäß mindestens einem der Ansprüche 1 bis 7 in polaren organischen Lösemitteln, die bei Raumtemperatur verdunsten, als Primer zum Verkleben von Fügeteilen aus synthetischem Kunststoff.

**9.** Verfahren zur Verklebung von Fügeteilen aus synthetischem Kunststoff, wobei man erst ein Imidazolderivat und dann einen Cyanacrylat-Klebstoff auf die Fügefläche aufträgt, dadurch gekennzeichnet, daß

man mindestens ein Imidazolderivat der Ansprüche 1 bis 7 aufträgt.

**10.** Verfahren nach Anspruch 9, dadurch gekennzeichnet, daß man Imidazolderivate gemäß Anspruch 3 oder 5 aufträgt.

**11.** Verfahren nach Anspruch 9 oder 10, dadurch gekennzeichnet, daß man die Imidazolderivate in Lösung in polaren organischen Lösemitteln, die bei Raumtemperatur verdunsten, aufträgt, insbesondere daß man Lösemittel aus der von Ketonen mit 3 bis 8 Kohlenstoffatomen, Alkanolen mit 1 bis 4 Kohlenstoffatomen und Estern der Essigsäure mit Alkanolen mit 1 bis 4 Kohlenstoffatomen gebildeten Gruppe verwendet.

**12.** Verfahren nach mindestens einem der Ansprüche 9 bis 11, dadurch gekennzeichnet, daß man die Imidazolderivate in Form einer 0,001 bis 5,0, insbesondere 0,05 bis 2,0 gew.-%igen Lösung aufträgt.

**13.** Verwendung von mindestens einem Imidazolderivat der allgemeinen Formel I gemäß mindestens einem der Ansprüche 1 bis 7 als Primer für die Verklebung von Fügeteilen aus Polyoxymethylen aus Polyolefinen wie Polyethylen oder Polypropylen, aus fluorhaltigen Polymeren oder aus thermoplastischem Kautschuk, einschließlich Siliconkautschuk.

## Claims

**1.** A combination product for bonding parts to be joined of synthetic materials containing a cyanoacrylate adhesive and an imidazole derivative as primer, characterized in that the primer contains at least one imidazole derivative corresponding to general formula I

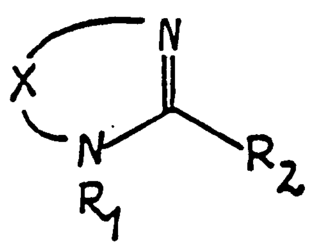

(I)

in which

- $R_1$ is hydrogen, an alkyl group which may be unsubstituted or substituted by an HO group or an (alkyl-O)$_3$ Si group, the alkyl radical containing 1 to 4 carbon atoms, an arylalkyl group containing 7 to 10 carbon atoms or an imidazole-CO group and
- $R_2$ is hydrogen, an alkyl, aryl or arylalkyl group containing up to 17 carbon atoms, with the proviso that one of the substituents $R_1$ or $R_2$ has an aromatic character,
- X is one of the following groups:
  - -CH = CH - or
  - $-CR_3R_4-CR_5R_6-$

where $R_3$, $R_4$, $R_5$ and $R_6$ independently of one another represent an alkyl group containing from 1 to 4 carbon atoms or an arylalkyl group containing up to 17 carbon atoms.

**2.** A combination product as claimed in claim 1, characterized in that

- X represents -CH = CH-,
- $R_1$ is an arylalkyl group containing 7 to 10 carbon atoms or an imidazole-CO group and
- $R_2$ is hydrogen or an alkyl group containing 1 to 4 carbon atoms.

**3.** A combination product as claimed in claim 2, characterized in that $R_1$ is a benzyl group and $R_2$ is hydrogen or a methyl group.

**4.** A combination product as claimed in claim 1, characterized in that

- X represents $-CR_3R_4 - CR_5R_6$ -,
- $R_1$ is hydrogen or a hydroxyalkyl group,

$R_2$ is an aryl group or an arylalkyl group containing up to 17 carbon atoms and
$R_3$, $R_4$, $R_5$ and $R_6$ independently of one another represent hydrogen or an alkyl group containing 1 to 4 carbon atoms.

**5.** A combination product as claimed in claim 4, characterized in that $R_1$ is hydrogen or, more particularly, a hydroxyethyl group, $R_2$ is a benzyl or phenyl group and $R_3$, $R_4$, $R_5$ and $R_6$ are hydrogen.

**6.** A combination product as claimed in at least one of claims 1 to 5, characterized in that the imidazole derivatives are dissolved or suspended in polar organic solvents which evaporate at room temperature, more particularly in solvents from the group consisting of ketones containing 3 to 8 carbon atoms, alkanols containing 1 to 4 carbon atoms and esters of acetic acid with alkanols containing 1 to 4 carbon atoms.

**7.** A combination product as claimed in at least one of the preceding claims, characterized by a 0.001 to 5.0% by weight and, more particularly, 0.05 to 2.0% by weight solution of the imidazole derivatives.

**8.** A primer for bonding parts to be joined of synthetic materials containing at least one imidazole derivative corresponding to general formula I as claimed in at least one of claims 1 to 7 in polar organic solvents which evaporate at room temperature.

**9.** A process for bonding parts to be joined of synthetic materials in which first an imidazole derivative and then a cyanoacrylate adhesive are applied to the surfaces to be joined, characterized in that at least one imidazole derivative according to claims 1 to 7 is applied.

**10.** A process as claimed in claim 9, characterized in that imidazole derivatives according to claim 3 or 5 are applied.

**11.** A process as claimed in claim 9 or 10, characterized in that the imidazole derivatives are applied in solution in polar organic solvents which evaporate at room temperature, more particularly in that solvents from the group consisting of ketones containing 3 to 8 carbon atoms, alkanols containing 1 to 4 carbon atoms and esters of acetic acid with alkanols containing 1 to 4 carbon atoms are used.

**12.** A process as claimed in at least one of claims 9 to 11, characterized in that the imidazole derivatives are applied in the form of a 0.001 to 5.0% by weight solution and, more particularly, in the form of a 0.05 to 2.0% by weight solution.

**13.** The use of at least one imidazole derivative of general formula I according to at least one of claims 1 to 7 as primers for bonding parts to be joined of polyoxymethylene, polyolefins, such as polyethylene or polypropylene, fluorine-containing polymers or thermoplastic rubber, including silicone rubber.

## Revendications

**1.** Produit combiné pour le collage de pièces à joindre en matière plastique synthétique, contenant une colle en cyanacrylate et un dérivé d'imidazole comme couche de fond, caractérisé en ce que la couche de fond renferme au moins un dérivé d'imidazole de la formule générale I

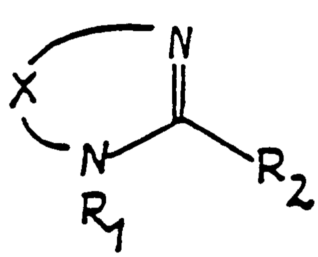

(I)

dans laquelle
$R_1$ représente un hydrogène,

un groupe alkyle, qui est non substitué ou qui est substitué par un groupe HO ou par un groupe $(alkyl\text{-}O)_3$ Si, le radical alkyle comportant 1 à 4 atomes de C, un groupe arylalkyle possédant 7 à 10 atomes de C ou un groupe imidazol-CO et

$R_2$ représente un hydrogène, un groupe alkyle, aryle ou arylalkyle comportant jusqu'à 17 atomes de C, à la condition que l'un des substituants $R_1$ ou $R_2$ possède un caractère aromatique,

X représente un des groupes suivants:

-CH = CH - ou

$-CR_3R_4-CR_5R_6-$

$R_3$, $R_4$, $R_5$ et $R_6$ représentant indépendamment les uns des autres l'hydrogène, un groupe alkyle possédant 1 à 4 atomes de C ou un groupe arylalkyle comportant jusqu'à 17 atomes de C.

**2.** Produit combiné selon la revendication 1, caractérisé en ce que

X est -CH = CH- et

$R_1$ représente un groupe arylalkyle comportant 7 à 10 atomes de C ou un groupe imidazol-COet

$R_2$ est l'hydrogène ou un groupe alkyle possédant 1 à 4 atomes de C.

**3.** Produit combiné selon la revendication 2, caractérisé en ce que $R_1$ représente un groupe benzyle et $R_2$ est l'hydrogène ou un groupe méthyle.

**4.** Produit combiné selon la revendication 1, caractérisé en ce que

X est $- CR_3R_4 - CR_5R_6 -$

$R_1$ représente l'hydrogène ou un groupe hydroxyalkyle,

$R_2$ correspond à un groupe aryle ou arylalkyle possédant jusqu'à 17 atomes de C et

$R_3$, $R_4$, $R_5$ et $R_6$ représentent indépendamment les uns des autres l'hydrogène ou un groupe alkyle comportant 1 à 4 atomes de C.

**5.** Produit combiné selon la revendication 4, caractérisé en ce que $R_1$ représente l'hydrogène ou, en particulier, un groupe hydroxyéthyle, $R_2$ correspond à un groupe benzyle ou phényle, et $R_3$, $R_4$, $R_5$ et $R_6$ représentent l'hydrogène.

**6.** Produit combiné selon au moins une des revendications 1 à 5, caractérisé en ce que les dérivés d'imidazole sont dissous ou en suspension dans des solvants organiques polaires, qui s'évaporent à température ambiante, en particulier dans des solvants appartenant au groupe formé des cétones comportant 3 à 8 atomes de carbone, des alcanols possédant 1 à 4 atomes de carbone et des esters de l'acide acétique avec des alcanols comportant 1 à 4 atomes de carbone.

**7.** Produit combiné selon au moins une des revendications qui précèdent, caractérisé par une solution à 0,001 à 5,0, en particulier à 0,05 à 2,0 % en poids des dérivés d'imidazole.

**8.** Utilisation d'au moins un dérivé d'imidazole de la formule générale I, selon au moins une des revendications 1 à 7, dans des solvants organiques polaires, qui s'évaporent à température ambiante, comme couche de fond pour le collage de pièces à joindre en matière plastique synthétique.

**9.** Procédé de collage de pièces à joindre en matière plastique synthétique, dans lequel on applique tout d'abord un dérivé d'imidazole et ensuite une colle en cyanacrylate sur la surface à coller, caractérisé en ce que l'on applique au moins un dérivé d'imidazole selon les revendications 1 à 7.

**10.** Procédé selon la revendication 9, caractérisé en ce que l'on applique des dérivés d'imidazole conformes à la revendication 3 ou 5.

**11.** Procédé selon la revendication 9 ou 10, caractérisé en ce que l'on applique les dérivés d'imidazole en solution dans des solvants organiques polaires, qui s'évaporent à température ambiante, en particulier en ce que l'on utilise des solvants appartenant au groupe formé des cétones comportant 3 à 8 atomes de carbone, des alcanols possédant 1 à 4 atomes de carbone et des esters de l'acide acétique avec des alcanols comportant 1 à 4 atomes de carbone.

**12.** Procédé selon une des revendications 9 à 10, caractérisé en ce que l'on applique les dérivés d'imidazole sous la forme d'une solution à 0,001 à 5,0, en particulier à 0,05 à 2,0 % en poids.

**13.** Utilisation d'au moins un dérivé d'imidazole de la formule générale I, conforme à au moins une des revendications 1 à 7, comme couche de fond pour le collage de pièces à joindre en polyoxyméthylène, en polyoléfines telles que polyéthylène ou polypropylène, en polymères fluorés ou en caoutchouc thermoplastique, y compris en caoutchouc silicone.